(19)

Europäisches
Patentamt
European
Patent Office
Office européen
des brevets

(11) **EP 1 950 819 A1**

(12) **EUROPEAN PATENT APPLICATION**

(43) Date of publication:
   **30.07.2008 Bulletin 2008/31**

(51) Int Cl.:
   *H01M 2/02* [(2006.01)]

(21) Application number: **08153731.8**

(22) Date of filing: **24.08.2004**

(84) Designated Contracting States:
   **BE DE ES FR GB**

(30) Priority: **29.08.2003 JP 2003306411**

(62) Document number(s) of the earlier application(s) in
   accordance with Art. 76 EPC:
   **04772416.6 / 1 658 651**

(71) Applicants:
   • **Matsushita Electric Industrial Co., Ltd.**
     **Kadoma-shi, Osaka 571-8501 (JP)**
   • **Toyo Kohan Co., Ltd.**
     **Tokyo 102-8447 (JP)**

(72) Inventors:
   • **Mori, Katsuhiko**
     **c/o Matsushita Electric Industrial Co Ltd**
     **2-1-61 Shiromi**
     **Chuo-ku**
     **Osaka 540-6207 (JP)**
   • **Kitagawa, Kouhei**
     **c/o Matsushita Electric Industrial Co Ltd**
     **2-1-61 Shiromi**
     **Chuo-ku**
     **Osaka 540-6207 (JP)**

   • **Matsuo, Akira**
     **c/o Matsushita Electric Industrial Co Ltd**
     **2-1-61 Shiromi**
     **Chuo-ku**
     **Osaka 540-6207 (JP)**
   • **Tomomori, Tatsuo**
     **c/o Toyo Kohan Co., Ltd.**
     **Yamaguchi 744-8611 (JP)**
   • **Honda, Yoshitaka**
     **c/o Toyo Kohan Co., Ltd.**
     **Yamaguchi 744-8611 (JP)**
   • **Yamane, Eiji**
     **c/o Toyo Kohan Co., Ltd.**
     **Yamaguchi 744-8611 (JP)**

(74) Representative: **Bradley, Josephine Mary**
   **D Young & Co**
   **120 Holborn**
   **London EC1N 2DY (GB)**

Remarks:
   This application was filed on 31.03.2008 as a
   divisional application to the application mentioned
   under INID code 62.

(54) **Battery can and manufacturing method thereof and battery using the same**

(57)   A battery can having an opening, comprising a
cylindrical side wall and a bottom, wherein said battery
can is formed from a steel plate, and said steel plate has
a carbon content of 0.004% by weight or less, and wherein a matte or semi-bright nickel layer of 0.5 to 3 $\mu$m in
thickness is formed on an inner face of the battery can,
with a nickel-iron alloy layer of 0.5 to 3 $\mu$m in thickness
interposed between the matte or semi-bright nickel layer
and the inner face of the battery can, and a bright nickel
layer of 0.5 to 3 $\mu$m in thickness is further formed on the
matte or semi-bright nickel layer.

FIG. 2

(d)

EP 1 950 819 A1

**Description**

Technical Field

The present invention relates to a high quality battery can for use as the casing of alkaline dry batteries, alkaline storage batteries, and non-aqueous electrolyte secondary batteries including lithium ion batteries, and to a method capable of manufacturing such a battery can with high productivity and at low costs. The present invention further pertains to a battery including such a high quality battery can.

Background Art

With the recent proliferation of portable devices, the number of batteries used therein has been continuing to increase, thereby resulting in a strong demand from the market for a reduction in the prices of both primary and secondary batteries.

Under such circumstances, DI (Drawing and Ironing) process has been proposed as a method of manufacturing battery cans, in order to heighten the productivity of battery cans and reduce their prices (for example, see Japanese Laid-Open Patent Publication No. Hei 8-55613). According to the DI process, a battery can with a predetermined shape is produced by working a steel plate into a cup-shaped intermediate product by deep drawing with a press, and successively drawing and ironing the cup-shaped intermediate product. That is, the DI process involves drawing and ironing that are performed in one process.

An example of a manufacturing method of battery cans according to the DI process is described below.

First, a 0.4 mm thick steel plate is prepared as a raw material, and the steel plate is heat-treated at 600 to 800 °C for 5 to 20 hours. Subsequently, the heat-treated steel plate is plated with nickel on both sides thereof, to form Ni-plating layers each having a thickness of approximately 3.5 $\mu$m. The resultant steel plate is then heat-treated at 500 to 650 °C for 1 to 20 hours, to prepare a battery can material. A nickel layer (Ni layer) and a nickel-iron alloy layer (Ni-Fe alloy layer) are formed on the surface of this battery can material. The formation of the Ni-Fe alloy layer is due mainly to the heat treatment, which causes Ni atoms to diffuse into the Fe layer of the steel plate.

From the battery can material, a cup-shaped intermediate product is formed by deep drawing. Thereafter, the side wall of the cup-shaped intermediate product is subjected to ironing such that the ratio of the thickness of the bottom thereof (bottom thickness) to the thickness of the side wall thereof (side thickness), i.e., bottom thickness/side thickness, is in a range of 1.6 to 3.4. In this way, a battery can with a predetermined shape is manufactured.

In order to carry out the DI process in a preferable manner, it is necessary to obtain a homogeneous battery can material free from distortion, and this requires a long-time heat treatment process as described above. Such long-time heat treatment is often performed using a box annealing furnace. In this case, a hoop-shaped steel plate is made into a spiral shape, placed in a box annealing furnace, and heat-treated.

In order to enhance the productivity of battery cans and reduce their prices, there has been another proposal focusing on the heat treatment process of a steel plate as a battery can material (for example, see Japanese Laid-Open Patent Publication No. Hei 6-346150). According to this proposal, the use of a steel plate having a carbon content of less than 0.009% by weight (ultralow-carbon steel plate) enables continuous annealing, thereby leading to a significant reduction in the time necessary for heat treatment, and an improvement in battery can productivity.

Regarding secondary batteries, improving their reliability, as well as reducing their prices, is also required. Battery cans for secondary batteries are required to have improved corrosion resistance. Because secondary batteries are used repeatedly by recharging them, their reliability must be ensured over extended periods of time. Alkaline storage batteries, such as nickel metal-hydride storage batteries, involve the use of a strongly alkaline electrolyte, so their battery cans are required to have strong alkali resistance. Also, non-aqueous electrolyte batteries, such as lithium ion batteries, produce high voltage, and hence, their battery cans are required to have stability in a wide potential range. From these viewpoints, the corrosion resistance of conventional battery cans is hardly sufficient.

Further, primary batteries have the additional problem in that the use of an ultralow-carbon steel plate for reducing the cost of their battery cans causes an increase in battery internal resistance. This problem occurs, because the use of an ultralow-carbon steel plate having a carbon content of less than 0.009% by weight results in an insufficiently strong battery can, thereby increasing the contact resistance between the positive electrode material mixture and the inner face of the battery can. Such increase in contact resistance is remarkable in primary batteries, such as alkaline dry batteries that do not use a spiral electrode group. Therefore, in improving the productivity of battery cans and reducing their costs, it is necessary to consider improving their strength.

Disclosure of Invention

The present invention relates to a battery can having an opening, comprising a cylindrical side wall and a bottom (open-topped battery can). The battery can is formed from a steel plate, and the steel plate has a carbon content of 0.004% by weight or less. By setting the carbon content to 0.004% by weight or less, high corrosion resistance can be realized.

From the viewpoint of improving the strength of the battery can, it is preferred that the steel plate contain manganese and phosphorus and that the steel plate have a manganese content of 0.35% by weight or more and 0.45% by weight or less and a phosphorus content of 0.025% by weight or more and 0.05% by weight or less.

From the viewpoint of enhancing the corrosion resistance of the battery can, it is preferred that a nickel layer of 0.5 to 3 $\mu$m in thickness be formed on an inner face of the battery can, with a nickel-iron alloy layer of 0.5 to 3 $\mu$m in thickness interposed therebetween. It is further preferred that a matte or semi-bright nickel layer of 0.5 to 3 $\mu$m in thickness be formed on an inner face of the battery can, with a nickel-iron alloy layer of 0.5 to 3 $\mu$m in thickness interposed therebetween, and that a bright nickel layer of 0.5 to 3 $\mu$m in thickness be formed on the matte or semi-bright nickel layer.

The bottom of the battery can has a thickness $t_{A1}$, and the side wall has a thickness $t_{B1}$. It is preferred that the $t_{A1}$ and the $t_{B1}$ satisfy the relation: $1.2 \leqq t_{A1}/t_{B1} \leqq 5$.

The nickel-iron alloy layer on the inner face of the bottom of the battery can has a thickness $t_{A2}$, and the nickel-iron alloy layer on the inner face of the side wall has a thickness $t_{B2}$. It is preferred that the $t_{A2}$ and the $t_{B2}$ satisfy the relation: $1.2 \leqq t_{A2}/t_{B2} \leqq 5$.

The nickel layer on the inner face of the bottom of the battery can has a thickness $t_{A3}$, and the nickel layer on the inner face of the side wall has a thickness $t_{B3}$. It is preferred that the $t_{A3}$ and the $t_{B3}$ satisfy the relation:

$$1.2 \leqq t_{A3}/t_{B3} \leqq 5.$$

The matte or semi-bright nickel layer and the bright nickel layer on the inner face of the bottom of the battery can have a total thickness $t_{A4}$, and the matte or semi-bright nickel layer and the bright nickel layer on the inner face of the side wall have a total thickness $t_{B4}$. It is preferred that the $t_{A4}$ and the $t_{B4}$ satisfy the relation: $1.2 \leqq t_{A4}/t_{B4} \leqq 5$.

The present invention is also directed to a method of manufacturing a battery can having an opening. This method includes the steps of: (1) applying Ni plating to both sides of a cold-rolled steel plate having a carbon content of 0.004% by weight or less; (2) placing the Ni-plated steel plate into a continuous annealing furnace and heat-treating it under a reducing atmosphere at 550 to 850 °C for 0.5 to 10 minutes; (3) applying bright Ni plating to at least one face of the heat-treated steel plate; (4) working the bright-Ni-plated steel plate into a cup-shaped intermediate product such that the bright-Ni-plated face of the steel plate faces inward; and (5) drawing the cup-shaped intermediate product with at least one drawing die and ironing it with ironing dies arranged in multi-stages.

The present invention is also directed to another method of manufacturing a battery can having an opening. This method includes the steps of: (1) applying Ni plating to both sides of a cold-rolled steel plate having a carbon content of 0.004% by weight or less, a manganese content of 0.35% by weight or more and 0.45% by weight or less, and a phosphorus content of 0.025% by weight or more and 0.05% by weight or less; (2) placing the Ni-plated steel plate into a continuous annealing furnace and heat-treating it under a reducing atmosphere at 550 to 850°C for 0.5 to 10 minutes; (3) working the heat-treated steel plate into a cup-shaped intermediate product; and (4) drawing the cup-shaped intermediate product with at least one drawing die and ironing it with ironing dies arranged in multi-stages.

The present invention also relates to an alkaline dry battery comprising: a positive electrode comprising a manganese compound; a negative electrode comprising a zinc compound; a separator; an alkaline electrolyte; and the above-described battery can accommodating the positive and negative electrodes, the separator, and the electrolyte.

The present invention also pertains to a nickel manganese battery comprising: a positive electrode comprising a nickel compound and a manganese compound; a negative electrode comprising a zinc compound; a separator; an alkaline electrolyte; and the above-described battery can accommodating the positive and negative electrodes, the separator, and the electrolyte.

The present invention also relates to an alkaline storage battery comprising: a positive electrode comprising a nickel compound; a negative electrode; a separator; an alkaline electrolyte; and the above-described battery can accommodating the positive and negative electrodes, the separator, and the electrolyte.

The present invention also pertains to a non-aqueous electrolyte secondary battery comprising: a positive electrode comprising a lithium-containing composite oxide; a negative electrode; a separator; a non-aqueous electrolyte; and the above-described battery can accommodating the positive and negative electrodes, the separator, and the electrolyte.

The present invention can provide a battery can having necessary and sufficient corrosion resistance at low costs.

Brief Description of Drawings

Fig. 1 shows oblique views (A) to (D) of open-topped battery cans that are circular, rectangular, rounded square, and oval, respectively, in cross section, and top views (a) to (d) thereof.
Fig. 2 shows a cross-sectional view (a) of one example of the battery can of the present invention, and partially enlarged views (b) to (d) thereof.
Fig. 3 shows a longitudinal sectional view (a) of one example of the battery can of the present invention, and a partially enlarged view (b) of the bottom and its vicinity thereof.
Fig. 4 shows an oblique view (a) of a steel plate used to manufacture a battery can, and a sectional enlarged view (b) thereof.
Fig. 5 shows manufacturing processes of a battery can including drawing and ironing.
Fig. 6 is a longitudinal sectional view of a lithium ion secondary battery.
Fig. 7 is a partially sectional front view of an alkaline dry battery.

Best Mode for Carrying Out the Invention

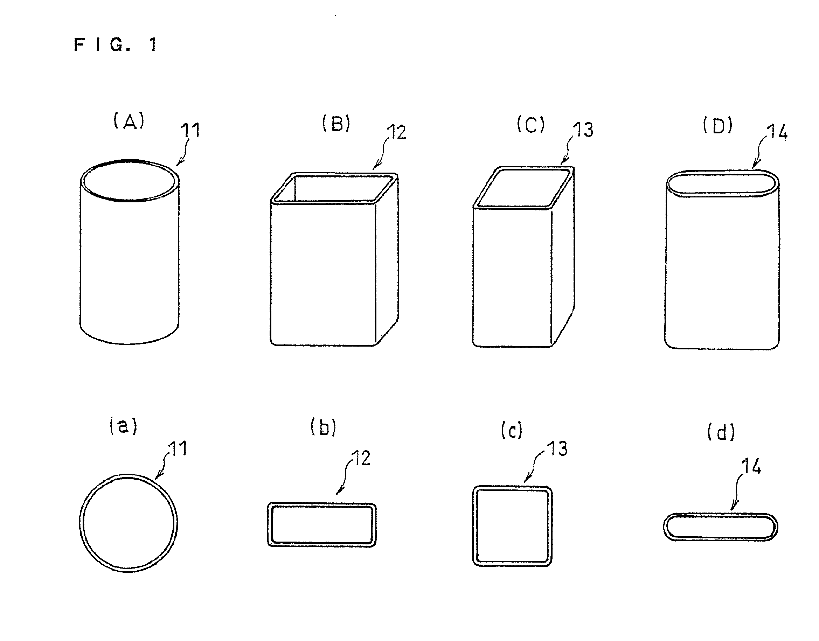

Referring now to drawings, embodiments of the present invention are described below.
The present invention relates to an open-topped battery can having a cylindrical side wall and a bottom and encompasses, for example, all the shapes as illustrated in Fig. 1. Fig. 1 (A) is an oblique view ot a cylindrical battery can 11 that is circular in cross section, and Fig. 1 (a) is a top view thereof. Fig. 1(B) to (D) are oblique views of open-topped battery cans 12, 13 and 14 that are rectangular, rounded square, and oval, respectively, in cross section, and Fig. 1(b) to (d) are top views thereof. Since these views merely illustrate examples of the battery can of the present invention, they are not to be construed as limiting in any way the present invention. The battery can may have a shape that is, for example, rounded rectangular, elliptic, polygonal in cross section. Also, the bottom of the battery can may be flat, or, may have a protrusion which also serves as the terminal of either the positive electrode or the negative electrode.
The battery can according to the present invention is formed from a steel plate, such as a cold-rolled steel plate subjected to a predetermined heat treatment. The thickness of the cold-rolled steel plate, which is the raw material, is preferably 0.2 to 1 mm. Although the steel plate is commonly worked into a battery can by the DI process, the working method of the steel plate is not to be limited to the DI process. One of the characteristics of the present invention is that the carbon content of the steel plate is 0.004% by weight or less. By setting the carbon content to 0.004% by weight or less, it becomes possible to realize high corrosion resistance and remove distortion by a short-time heat treatment. That is, high corrosion resistance and reduced heat treatment time can be realized simultaneously.
In order to improve the strength of the battery can, it is effective for the steel plate to contain manganese and phosphorus. In this case, the manganese content is preferably 0.35% by weight or more and 0.45% by weight or less, while the phosphorus content is preferably 0.025% by weight or more and 0.05% by weight or less.
It should be noted that electrolytes used in alkaline manganese dry batteries are strongly alkaline and thus dissolve Mn and the like readily. Therefore, when alkaline manganese dry batteries are formed with battery cans containing large amounts of Mn, such battery cans are thought to be susceptible to corrosion. Hence, it has conventionally been preferred that the Mn content of battery cans be low, so that the Mn content of the steel plate has been restricted to 0.3% by weight or less. However, from the above-mentioned viewpoint of improving the can strength, it is preferred that the Mn content be 0.35 to 0.45 % by weight.
The steel plate may contain small amounts of Al, Si, S, Nb, N, Cr, B, Ti, and other elements.
In the manufacture of the battery can of the present invention, a cold-rolled steel plate, as described above, which is subjected to a plating treatment and a heat treatment for annealing, is used as the material.

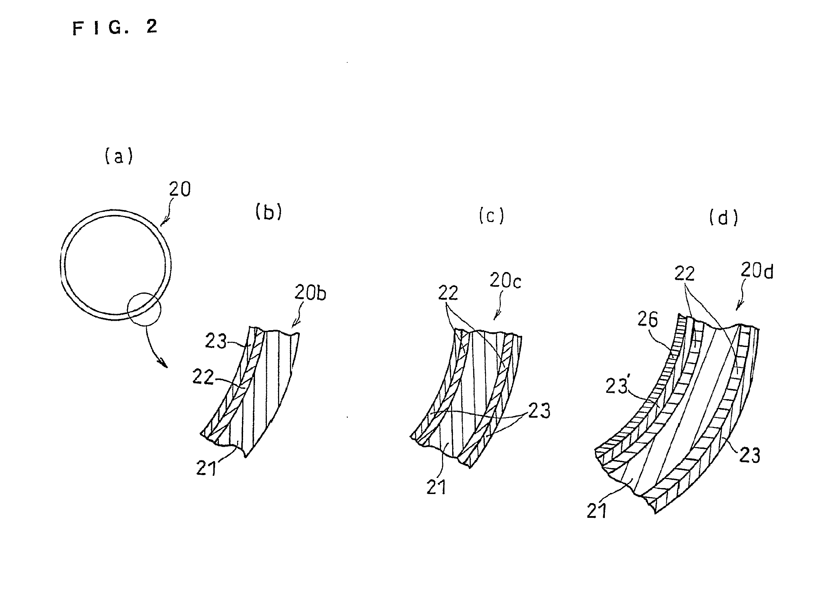

Fig. 2 (a) is a cross sectional view of a cylindrical battery can 20 formed of a steel material 21 in an embodiment of the present invention. Also, Fig. 2 (b) is an enlarged view of a cross section of a battery can 20b having a nickel layer (hereinafter referred to as Ni layer) 23 on the inner face with a nickel-iron alloy layer (hereinafter referred to as Ni-Fe alloy layer) 22 interposed therebetween. Fig. 2 (c) is an enlarged view of a cross section of a battery can 20c having the Ni layer 23 on both the inner face and the outer face with the Ni-Fe alloy layer 22 interposed therebetween. Further, Fig. 2 (d) is an enlarged view of a cross section of a battery can 20d. The battery can 20d has a bright Ni layer 26 on the inner face with the Ni-Fe alloy layer 22 and a matte or semi-bright Ni layer 23' interposed therebetween, and also has the Ni layer 23 on the outer face with the Ni-Fe alloy layer 22 interposed therebetween.
In Fig. 2(b) to (d), the thickness of the Ni-Fe alloy layer 22 is preferably 0.5 to 3 $\mu$m, and the thickness of the Ni layer 23 or the matte or semi-bright Ni layer 23' is preferably 0.5 to 3 $\mu$m. Also, the thickness of the bright Ni layer 26 is preferably 0.5 to 3 $\mu$m. Each layer's thickness of 0.5 $\mu$m or more is sufficient to obtain the effect of suppressing battery can corrosion, and even if the thickness exceeds 3 $\mu$m, the resultant effect of corrosion suppression is not expected to be better than that obtained from the thickness of the above-mentioned range. This also applies to the thicknesses of the respective layers of a battery can of any shape.

The respective layers as described above have the effect of corrosion suppression in common, but the plated layer usually has a large number of pin holes. Thus, a heat treatment is applied after the Ni plating to produce a Ni-Fe alloy layer, and this makes it possible to reduce these pin holes, and at the same time, to suppress the separation of the plated layer. It should be noted, however, that the corrosion resistance provided only by the Ni-Fe alloy layer is insufficient, so that another Ni layer becomes necessary on the Ni-Fe alloy layer. Meanwhile, in addition to the effect of providing the battery can with corrosion resistance, the bright Ni layer has the effect of smoothing the inner surface of the battery can and improving the sliding characteristics for the insertion of an electrode plate group. Also, the brightener contained in a bright Ni plating bath has the function of inhibiting and retarding the growth of a plated layer, as a result of which a smooth and closely-plated layer with fewer pin holes is formed. A combination of these layers can realize favorable corrosion resistance at relatively low costs, with the additional effect of improving the sliding characteristics for the insertion of an electrode plate group.

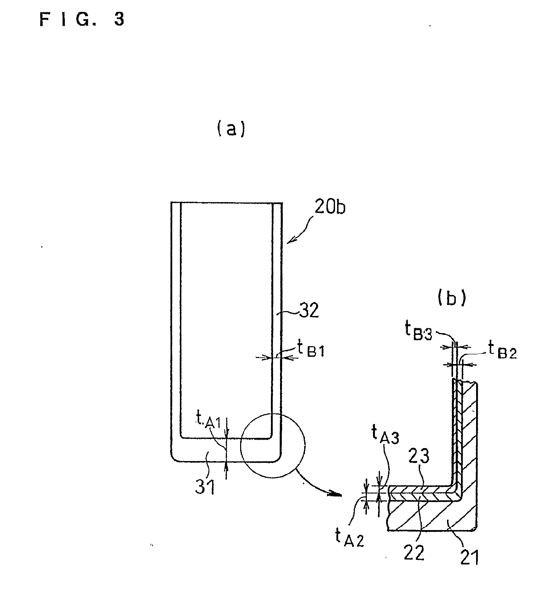

Next, a longitudinal sectional view of the battery can of Fig. 2 (b) is shown in Fig. 3 (a), and a partially enlarged view of the bottom and its vicinity is shown in Fig. 3 (b). By reducing the thickness of the battery can, the internal volume of the battery can be increased, and battery capacity can be heightened. In order to reduce the thickness of rectangular and cylindrical batteries, thinning particularly the side walls of their battery cans is effective. Therefore, in Fig. 3 (a), a side wall 32 of the battery can is thinner than a bottom 31. It is preferred that the thickness $t_{A1}$ of the bottom 31 and the thickness $t_{B1}$ of the side wall 32 satisfy the relation: $1.2 \leqq t_{A1}/t_{B1} \leqq 5$. When $1.2 \leqq t_{A1}/t_{B1}$, the thickness of the side wall of the battery can be decreased, thereby making it possible to heighten the capacity. When $t_{A1}/t_{B1} \leqq 5$, the thickness and strength of the bottom can be sufficiently ensured.

As described, when the above relation is satisfied, the internal volume of the battery can can be maximized to heighten the capacity, while the bottom of the battery can can be made thick enough to suppress deformation of the can which might occur upon welding of a current-collecting lead or increase in internal pressure.

In the DI process, when the side wall of a battery can is ironed, work hardening occurs. Due to the effect of work hardening, the strength of the side wall of the battery can per unit thickness becomes greater than that in the transfer process in which drawing is repeated. This also applies to the thicknesses of the bottom and the side wall of a battery can of any shape.

A current-collecting lead or the like may be welded to the bottom of the battery can. In such cases, if the Ni-Fe alloy layer and the Ni layer on the inner face of the bottom are too thin, the steel material may be exposed upon the welding. It is therefore preferred that the Ni-Fe alloy layer and the Ni layer on the inner face of the bottom be thicker than those on the inner face of the side wall.

Also, in the process of working the steel plate into the battery can, a protrusion serving as an electrode terminal may be formed on the bottom of the battery can. In such cases, cracks are apt to appear around the protrusion where the battery can is bent. Accordingly, it is also preferred that the Ni-Fe alloy layer and the Ni layer on the inner face of the bottom be thicker than those on the inner face of the side wall, in order to ensure the prevention of corrosion of the inner face of the battery can.

With respect to the thickness $t_{A2}$ of the Ni-Fe alloy layer on the inner face of the bottom, the thickness $t_{B2}$ of the Ni-Fe alloy layer on the inner face of the side wall, the thickness $t_{A3}$ of the Ni layer on the inner face of the bottom, and the thickness $t_{B3}$ of the Ni layer on the inner face of the side wall, it is also preferred that $1.2 \leqq t_{A2}/t_{B2} \leqq 5$ and $1.2 \leqq t_{A3}/t_{B3} \leqq 5$. When $1.2 \leqq t_{A2}/t_{B2}$, the thickness of the side wall of the battery can can be decreased, thereby making it possible to heighten the capacity. When $t_{A2}/t_{B2} \leqq 5$, the thickness of the Ni-Fe alloy layer on the bottom of the battery can can be sufficiently ensured. Also, When $1.2 \leqq t_{A3}/t_{B3}$, the thickness of the side wall of the battery can can be decreased, thereby making it possible to heighten the capacity. When $t_{A3}/t_{B3} \leqq 5$, the thickness of the Ni layer on the bottom of the battery can can be sufficiently ensured.

As described, when the above relations are satisfied, the internal volume of the battery can can be maximized, so that the capacity can be heightened. In addition, the thicknesses of the Ni-Fe alloy layer and the Ni layer on the bottom of the battery can can be sufficiently ensured, so that it is possible to suppress the impairment of corrosion resistance due to damages upon insertion of an electrode plate group and welding of a current-collecting lead. This also applies to the ratio of the thicknesses of the respective layers of a battery can of any shape.

When forming the matte or semi-bright Ni layer and the bright Ni layer on the inner face of the battery can, it is also preferred that the total thickness $t_{A4}$ of the matte or semi-bright Ni layer and the bright Ni layer on the inner face of the bottom and the total thickness $t_{B4}$ of the matte or semi-bright Ni layer and the bright Ni layer on the inner face of the side wall satisfy the relation: $1.2 \leqq t_{A4}/t_{B4} \leqq 5$.

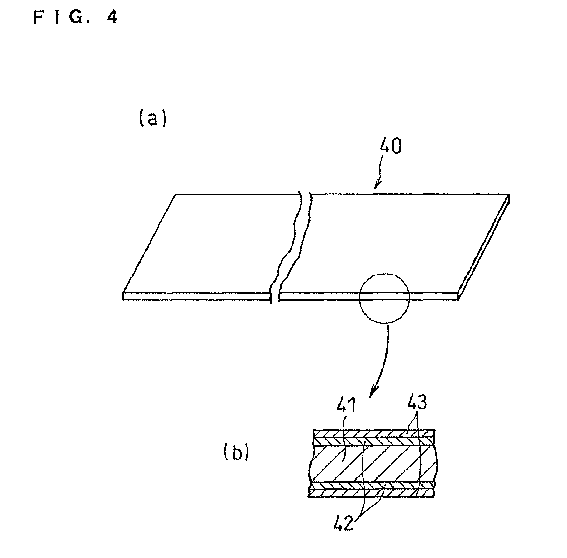

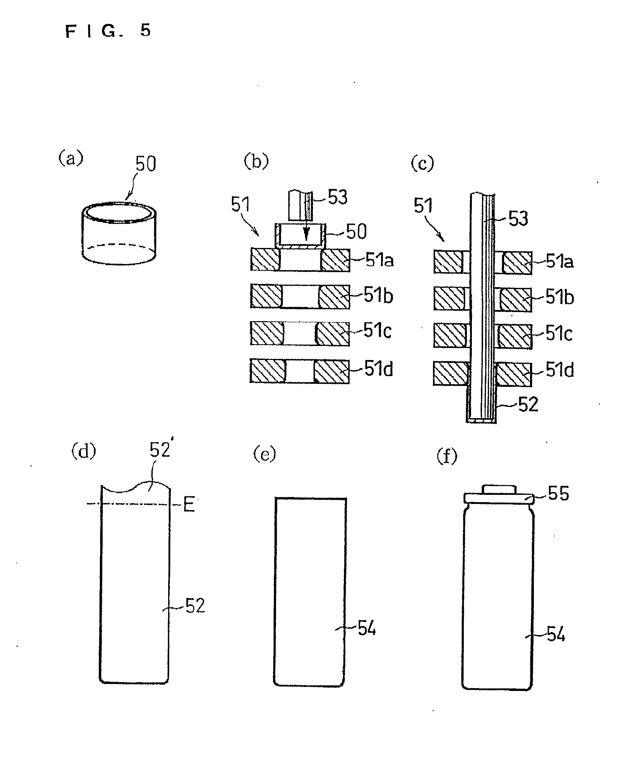

Referring now to Figs. 4 and 5, one example of the manufacturing method of the battery can according to the present invention is described.

First, a cold-rolled steel plate 40 having a carbon content of 0.004% by weight or less (Fig. 4 (a)) is prepared. However, when the battery can is intended for use in a primary battery, it is preferred, from the view point of ensuring sufficient strength, that the steel plate further contain Mn in an amount of 0.35% by weight or more and 0.45% by weight or less and phosphorus in an amount of 0.025% by weight or more and 0.05% by weight or less. The steel plate 40 is plated with Ni on both sides thereof to form Ni layers 43 of a predetermined thickness.

The Ni-plated steel plate is placed in a continuous annealing furnace and heat-treated at 550 to 850 °C under a reducing atmosphere for 0.5 to 10 minutes. By this process, a Ni-Fe alloy layer 42 is formed on both sides of a steel material 41 between each of the Ni layers 43 and the steel material 41, as illustrated in Fig. 4 (b). The total thickness of the Ni layer and the Ni-Fe alloy layer is greater than the thickness of the Ni layer before the heat treatment, because the heat treatment causes Ni to diffuse into the steel material. The use of the cold-rolled steel plate having a carbon content of 0.004% by weight or less eliminates the need for a long-time heat treatment in a box annealing furnace, making it possible to remove distortion of the material by a short-time heat treatment in a continuous annealing furnace. Accordingly, the DI process can be carried out in a preferable manner, so that high productivity can be realized. When higher corrosion resistance is required, it is preferred to apply bright Ni plating to at least one face of the heat-treated steel plate.

Next, the steel plate with the Ni layers and the Ni-Fe alloy layers formed thereon is fed to a press and punched out into a predetermined shape. The punched steel plate is worked into a cup-shaped intermediate product 50 by deep drawing, as illustrated in Fig. 5 (a). It should be noted that in cases bright Ni plating is further applied onto the Ni layer, the steel plate is worked into the cup shape such that the bright-Ni-plated face thereof faces inward. At the bottom and side wall of the cup-shaped intermediate product 50 thus obtained, the thickness of the steel material, the thickness of the Ni layers, the thickness of the Ni-Fe alloy layers, and the thickness of the bright Ni layer(s) are almost the same as those of the steel plate before its working into the cup shape.

Thereafter, using a drawing-ironing machine 51 and a punch 53 as illustrated in Fig. 5 (b) and (c), the cup-shaped intermediate product 50 is worked into a cylinder 52. Since the drawing-ironing machine 51 of Fig. 5 is equipped with one drawing die 51a and three ironing dies 51b to 51d, the cup-shaped intermediate product 50 can be subjected to one drawing operation and three ironing operations successively.

An edge 52' around the opening of the cylinder 52 usually has an irregular shape, as illustrated in Fig. 5 (d), so the edge 52' is cut away along the broken line E. Fig. 5(e) is a side view of a completed battery can 54 with a predetermined diameter and height. A positive electrode, a negative electrode, a separator, an electrolyte, and the like are placed in the battery can 54, which is then subjected to operations such as flanging and caulking to mount a cover 55. In this way, a battery is completed.

The thickness of the bottom of the battery can 54 is almost the same as that before the working into the cup shape. On the other hand, the thickness of the side wall is decreased by the ironing. Also, simultaneously with the decrease in the thickness of the side wall, the thicknesses of the Ni layers and the Ni-Fe alloy layers on the inner and outer faces of the side wall are also decreased at almost the same rate. Therefore, by appropriately controlling the ironing rate, i.e., by appropriately setting, for example, the internal diameters of the ironing dies, it is possible to obtain a battery can that satisfies the relations: $1.2 \leqq t_{A1}/t_{B1} \leqq 5$, $1.2 \leqq t_{A2}/t_{B2} \leqq 5$, $1.2 \leqq t_{A3}/t_{B3} \leqq 5$, and $1.2 \leqq t_{A4}/t_{B4} \leqq 5$.

In the following, the present invention is described more specifically by way of examples.

Example 1

(i) Ni plating treatment

Hoop-shaped cold-rolled steel plates (No. 1 to No. 19) of 0.4 mm in thickness were prepared as battery can materials. These plates included components as listed in Table 1, in addition to Fe which is the main component and an impurity. Each steel plate was electroplated with Ni on both sides thereof. The conditions of Ni electroplating are shown in Table 2.

Table 1

| Steel plate No. | Steel components (% by weight) | | | | | |
|---|---|---|---|---|---|---|
| | C | Mn | P | Si | Al | S |
| 1 | 0.001 | 0.020 | 0.010 | 0.020 | 0.040 | 0.010 |
| 2 | 0.002 | 0.020 | 0.010 | 0.020 | 0.040 | 0.010 |
| 3 | 0.004 | 0.020 | 0.010 | 0.020 | 0.040 | 0.010 |
| 4 | 0.005 | 0.020 | 0.010 | 0.020 | 0.040 | 0.010 |
| 5 | 0.008 | 0.020 | 0.010 | 0.020 | 0.040 | 0.010 |

(continued)

| Steel plate No. | Steel components (% by weight) | | | | | |
|---|---|---|---|---|---|---|
| | C | Mn | P | Si | Al | S |
| 6 | 0.020 | 0.020 | 0.010 | 0.020 | 0.040 | 0.010 |
| 7 | 0.002 | 0.350 | 0.025 | 0.020 | 0.040 | 0.010 |
| 8 | 0.002 | 0.400 | 0.040 | 0.020 | 0.040 | 0.010 |
| 9 | 0.002 | 0.450 | 0.050 | 0.020 | 0.040 | 0.010 |
| 10 | 0.002 | 0.350 | 0.040 | 0.020 | 0.040 | 0.010 |
| 11 | 0.002 | 0.400 | 0.050 | 0.020 | 0.040 | 0.010 |
| 12 | 0.002 | 0.450 | 0.025 | 0.020 | 0.040 | 0.010 |
| 13 | 0.001 | 0.020 | 0.010 | 0.010 | 0.040 | 0.010 |
| 14 | 0.001 | 0.020 | 0.010 | 0.040 | 0.040 | 0.010 |
| 15 | 0.001 | 0.020 | 0.010 | 0.020 | 0.030 | 0.010 |
| 16 | 0.001 | 0.020 | 0.010 | 0.020 | 0.060 | 0.010 |
| 17 | 0.001 | 0.020 | 0.010 | 0.020 | 0.080 | 0.010 |
| 18 | 0.001 | 0.020 | 0.010 | 0.020 | 0.040 | 0.000 |
| 19 | 0.001 | 0.020 | 0.010 | 0.020 | 0.040 | 0.020 |

Table 2

| Item | Condition |
|---|---|
| Bath composition | Nickel sulfate 250g/L |
| | Nickel chloride 45g/L |
| | Boric acid 30g/L |
| Bath temperature | 50°C |
| Current density | 0.1 A/cm$^2$ |
| pH | 4.3 |

After the Ni electroplating, the Ni layers formed on both the front side and the back side of each steel plate had a thickness of approximately 2 μm. Although matte Ni electroplating as shown in Table 2 was employed as the Ni electroplating, semi-bright Ni electroplating may be employed. The plated layer of matte Ni electroplating does not contain S (sulfur), whereas the plated layer of semi-bright Ni electroplating contains S in an amount not more than 0.005% by weight.

(ii) Heat treatment

Next, each Ni-plated steel plate was placed into a continuous annealing furnace, and heat-treated at 780 °C for 2 minutes while circulating a gas consisting of about 99 % nitrogen and about 1% hydrogen (i.e., a reducing atmosphere). As a result of the heat treatment, a Ni-Fe alloy layer was formed on each side of the steel plate under each Ni layer. That is, the Ni-Fe alloy layer was formed between each Ni layer and the steel plate. The thickness of the Ni-Fe alloy layer was approximately 1 μm, and the thickness of the Ni layer was approximately 1.3 μm.

The thickness of the Ni-Fe alloy layer was measured by glow discharge optical emission spectrometry, and the interface between the Ni-Fe alloy layer and the Ni layer was defined as being a point at which the emission intensity of Fe was 10% of the intensity of Fe in the steel. Also, the interface between the Ni-Fe alloy layer and the steel material was defined as being a point at which the emission intensity of Ni was 10% of the intensity of Ni in the Ni layer.

(iii) Bright Ni plating treatment

Subsequently, bright Ni electroplating was applied to one face of the heat-treated steel plate. The plated layer of bright Ni electroplating contains 0.01 to 0.1 % by weight of S. The thickness of the bright Ni layer was set to approximately 2 μm. The conditions of the bright Ni electroplating are shown in Table 3. Although Table 3 cites benzenesulfonic acid derivative as the brightener, sodium naphthalene-di-1,5-sulfonate, sodium naphthalene-tri-1,3,6-sulfonate, p-toluenesulfoamide, sodium saccharin benzenesulfonate, and the like may be used.

The thickness of the bright Ni layer was determined by analyzing S contained in the brightener of benzenesulfonic acid derivative.

Table 3

| Item | Condition |
|---|---|
| Bath composition | Nickel sulfate 250g/L |
| | Nickel chloride 45g/L |
| | Boric acid 30g/L |
| | Sodium lauryl sulfate 0.5g/L |
| | benzenesulfonic acid derivative 1.0mL/L |
| Bath temperature | 60°C |
| Current density | 0.1 A/cm$^2$ |
| PH | 4.3 |

(iv) Working of steel plate into battery can

The bright-Ni-plated steel plate was punched out into a circular shape, and the punched plate was worked into a cup-shaped intermediate product such that the bright-Ni-plated face faced inward. The cup-shaped intermediate product was formed into a cylindrical shape by the DI process, in which it was successively subjected to drawing operations with two drawing dies and ironing operations with three ironing dies. The edge of the resultant cylindrical product was cut away, to produce a battery can.

The battery can thus obtained was in the shape of a cylinder having an outer diameter of 18 mm and a height of 65 mm. The thickness of the bottom of the battery can was approximately 0.4 mm, and the thickness of the side wall was 0.2 mm ($t_{A1}/t_{B1} = 2$). That is, by the DI process, the thickness of the side wall of the battery can was reduced to half that of the original thickness. With this decrease, it was considered that the thicknesses of the Ni layers, the Ni-Fe alloy layers, and the bright Ni layer on the side wall of the battery can were also decreased at the same rate ($t_{A2}/t_{B2} = 2$, $t_{A4}/t_{BA} = 2$).

Using the battery cans obtained in the above manner, lithium ion secondary batteries and nickel metal-hydride storage batteries were produced. The production method of these batteries is described below.

(v) Production of lithium ion secondary battery

Using 19 kinds of battery cans formed from 19 kinds of steel plates as listed in Table 1, 19 kinds of lithium ion secondary batteries (capacity: 1.6 Ah) were produced and named batteries 1 to 19. Ten batteries of each kind were produced.

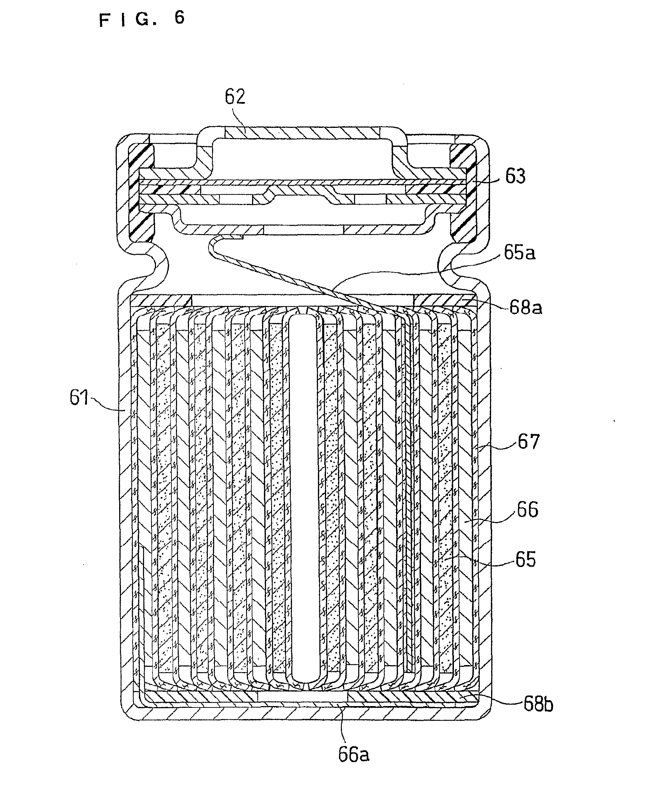

Fig. 6 is a longitudinal sectional view of a cylindrical lithium ion secondary battery produced in this example. A battery can 61 accommodates an electrode plate group. The electrode plate group consists of a positive electrode plate 65, a negative electrode plate 66, and a separator 67 interposed between the positive and negative electrode plates, the electrode plate group being spirally rolled up a plurality of turns. The opening end of the battery can 61 is sealed by a sealing plate 62, which is equipped with a safety valve and also serves as a positive electrode terminal. The battery can 61 is electrically insulated from the sealing plate 62 by an insulating packing 63. A positive electrode lead 65a, which is attached to the positive electrode plate 65, is electrically connected to the sealing plate 62. A negative electrode lead 66a, which is attached to the negative electrode plate 66, is electrically connected to the inner face of the bottom of the battery can 61. An insulating rings 68a and 68b are fitted to the upper and lower parts of the electrode plate group, respectively.

The positive electrode plate 65 was prepared in the following manner.

Lithium cobaltate was used as a positive electrode active material, but this is not to be construed as limiting the positive electrode active material. The positive electrode active material, acetylene black, an aqueous polytetrafluoroethylene dispersion, and an aqueous carboxymethyl cellulose solution were mixed and formed into a positive electrode paste. The paste was applied to both sides of aluminum foil, followed by drying. The resultant electrode plate was then rolled and cut into a predetermined size, to obtain the positive electrode plate 65.

The negative electrode plate 66 was prepared as follows.

Artificial graphite derived from coke was used as a negative electrode active material, but this is not to be construed as limiting the negative electrode active material. The negative electrode active material, an aqueous styrenebutadiene rubber dispersion, and an aqueous carboxymethyl cellulose solution were mixed and formed into a negative electrode paste. The paste was applied to both sides of copper foll, followed by drying. The resultant electrode plate was then rolled and cut into a predetermined size, to obtain the negative electrode plate.

The positive electrode lead 65a and the negative electrode lead 66a were attached to the positive electrode plate 65 and the negative electrode plate 66, respectively. These plates were spirally rolled up with the polyethylene separator 67 interposed therebetween, to form an electrode plate group, which was then accommodated in the battery can 61 with an electrolyte. The electrolyte was composed of $LiPF_6$ dissolved in a mixture solvent of ethylene carbonate and ethyl methyl carbonate. Thereafter, the opening of the battery can 61 was sealed to complete a battery.

(vi) Production of nickel metal-hydride storage battery

Using 19 Kinds of battery cans formed from 19 kinds of steel plates as listed in Table 1, 19 kinds of nickel metal-hydride storage batteries (capacity: 3 Ah) were produced and named batteries 20 to 38. Ten batteries of each kind were produced.

The positive electrode plate was prepared as follows.

Nickel hydroxide containing Co and Zn was used as the positive electrode active material. 100 parts by weight of this active material, 10 parts by weight of cobalt hydroxide, water, and a binder were mixed together. The mixture was then filled into the pores of a foamed nickel sheet having a thickness of 1.2 mm. The resultant sheet was dried, rolled, and cut to prepare the positive electrode plate. To the positive electrode plate was attached a current-collecting lead.

The negative electrode plate was prepared as follows.

A hydrogen-storing alloy of the known $AB_5$ type was used as the negative electrode active material. This alloy was pulverized into a powder having a mean particle size of 35 $\mu$m. The alloy powder was subjected to an alkali treatment and then mixed with a binder and water. Subsequently, the resultant mixture was applied to a punched metal base plate plated with Ni. This was rolled and cut to prepare the negative electrode plate. To the negative electrode plate was also attached a current-collecting lead.

A separator was interposed between the positive and negative electrode plates, and these plates were rolled up to form an electrode plate group. The separator used was a 150 $\mu$m thick polypropylene non-woven fabric that was made hydrophilic. Then, a ring-shaped bottom insulator plate was fitted to the bottom face of the electrode plate group, which was then placed in the battery can. A negative electrode lead was spot-welded to the inner face of the bottom of the battery can. Also, an aqueous potassium hydroxide solution having a specific gravity of 1.3 g/ml was injected into the battery can as the electrolyte. Thereafter, an upper insulator plate was mounted on the upper face of the electrode plate group, and the opening of the battery can was sealed with a sealing member to which a gasket was fitted. This sealing member was equipped with a safety valve and a positive electrode cap. It should be noted, however, that before the sealing, the positive electrode lead and the positive electrode cap were connected to each other. In this way, a sealed battery was completed.

(vii) Cycle life test

Lithium ion secondary batteries (batteries 1 to 19) and nickel metal-hydride storage batteries (batteries 20 to 38) were repeatedly charged and discharged under the conditions as shown in Table 4, to perform cycle life tests. In the tests, cycle life was defined as the cycle number in which the discharge capacity reached 70% of the initial capacity (the discharge capacity in the third cycle), and the results thereof are shown In Table 5. It should be noted that each result is the mean value of 10 batteries.

Table 4

| Battery | Lithium ion secondary battery | Nickel metal-hydride storage battery |
|---|---|---|
| Temperature atmosphere | 45°C | 45°C |

(continued)

| Battery | | Lithium ion secondary battery | Nickel metal-hydride storage battery |
|---|---|---|---|
| Charging condition | Charge current | 320 mA | 300 mA |
| | Charge upper limit voltage | 4.2 V | Not set |
| | Charging time | Until voltage reaches upper limit | 12 hours |
| | Idle time after charge | 1 hour | 1 hour |
| Discharging condition | Discharge current | 320 mA | 600 mA |
| | Discharge cut-off voltage | 2.5 V | 1 V |
| | Idle time after discharge | 1 hour | 1 hour |

Table 5

| Lithium ion secondary battery | | Nickel metal-hydride storage battery | |
|---|---|---|---|
| No. | Cycle life | No. | Cycle life |
| 1 | 550 | 20 | 650 |
| 2 | 540 | 21 | 640 |
| 3 | 520 | 22 | 620 |
| 4 | 370 | 23 | 390 |
| 5 | 350 | 24 | 370 |
| 6 | 300 | 25 | 320 |
| 7 | 520 | 26 | 620 |
| 8 | 520 | 27 | 620 |
| 9 | 500 | 28 | 600 |
| 10 | 530 | 29 | 630 |
| 11 | 520 | 30 | 620 |
| 12 | 500 | 31 | 600 |
| 13 | 540 | 32 | 640 |
| 14 | 550 | 33 | 650 |
| 15 | 550 | 34 | 650 |
| 16 | 540 | 35 | 640 |
| 17 | 550 | 36 | 630 |
| 18 | 540 | 37 | 650 |
| 19 | 530 | 38 | 620 |

As is shown in Table 5, when the carbon content of the steel plate is 0.004% by weight or less, the cycle life was 500 or higher for lithium ion secondary batteries and 600 or higher for nickel metal-hydride storage batteries. In this way, the difference in the carbon content of the steel plate caused a large difference in cycle life characteristics, and this difference may be attributable mainly to the corrosion resistance of the steel plate. That is, the reason is considered as follows. When the carbon content is low, the corrosion resistance of the steel plate increases, thereby suppressing the leaching of Fe contained in the steel material into the electrolyte. On the other hand, when the carbon content exceeds 0.004% by weight, the corrosion resistance is insufficient, thereby undesirably allowing Fe to leach out of the steel material, even if the steel material is plated with bright Ni. Fe presumably interferes with the electrochemical reaction at the interface between the electrode and the electrolyte.

Also, when the carbon content is greater than 0.004% by weight, the thickness of the side wall of the battery can became uneven and the side wall became cracked, although the probability of occurrence was low. This is presumably because the distortion was not sufficiently removed by the short-time (2 minutes) heat treatment when the carbon content was greater than 0.004% by weight.

As described above, the use of a steel plate having a carbon content of 0.004% by weight or less as the battery can material leads to an improvement in corrosion resistance. In addition, it has another advantage in that the heat treatment can be performed in a short period of time and continuously.

Accordingly, the present invention can provide a battery can having high corrosion resistance while reducing manufacturing costs. As a result, it becomes possible to manufacture a battery having long cycle life at low costs.

Example 2

The effect of bright Ni plating is described below.

Using the steel plates having the same composition as that of the steel plate No. 2 in Table 1, battery cans and batteries were produced in the same manner as in Example 1, but without applying the bright Ni electroplating or by varying the thickness of the bright Ni layer. These batteries were subjected to the cycle life tests. The results are shown in Table 6. The thickness of the bright Ni layer as shown in Table 6 is the thickness thereof on the inner face of the bottom of the battery can. As is clear from Table 6, the bright Ni layers having thicknesses of 0.5 $\mu$m or more produced good results.

Table 6

| Steel plate No. | Bright Ni plating | | Lithium ion secondary battery | | Nickel metal-hydride storage battery | |
|---|---|---|---|---|---|---|
| | Yes/No | Thickness ($\mu$m) | No. | Cycle life | No. | Cycle life |
| 2 | Yes | 2 | 2 | 540 | 21 | 640 |
| 2 | No | 0 | 39 | 400 | 45 | 500 |
| 2 | Yes | 0.2 | 40 | 450 | 46 | 550 |
| 2 | Yes | 0.5 | 41 | 500 | 47 | 600 |
| 2 | Yes | 1 | 42 | 500 | 48 | 600 |
| 2 | Yes | 3 | 43 | 550 | 49 | 650 |
| 2 | Yes | 5 | 44 | 550 | 50 | 650 |

In the presence of the bright Ni layer in a corrosive environment, the bright Ni layer, which is the uppermost layer, serves as an anode, and the corrosion spreads in the lateral direction (the direction perpendicular to the direction of thickness of the bright Ni layer). However, since the Ni layer under the bright Ni layer serves as a cathode because of the difference in sulfur content, the corrosion thereof is suppressed. This is considered as the reason why the corrosion of Fe present under the Ni layer can be effectively prevented.

Example 3

Next, the values of $t_{A1}/t_{B1}$, $t_{A2}/t_{B2}$, and $t_{A4}/t_{B4}$ are explained.

Using the steel plates having the same composition as that of the steel plate No. 2 in Table 1, battery cans and batteries were produced in the same manner as in Example 1, but by varying the respective values of $t_{A1}/t_{B1}$, $t_{A2}/t_{B2}$, and $t_{A4}/t_{B4}$. These batteries were subjected to the cycle life tests. The results are shown in Table 7. In order to realize the values of $t_{A1}/t_{B1}$, $t_{A2}/t_{B2}$, and $t_{A4}/t_{B4}$ as listed in Table 7, the dimensions and number of the respective dies and the dimensions of the punch were varied in the process of battery can formation (i.e., DI process).

Table 7

| Steel plate No. | Battery can | | | Lithium ion secondary battery | | Nickel metal-hydride storage battery | |
|---|---|---|---|---|---|---|---|
| | $t_{A1}/t_{B1}$ | $t_{A2}/t_{B2}$ | $t_{A4}/t_{B4}$ | No. | Cycle life | No. | Cycle life |
| 2 | 2 | 2 | 2 | 2 | 540 | 21 | 640 |
| 2 | 1.1 | 1.1 | 1.1 | 51 | 450 | 57 | 500 |
| 2 | 1.2 | 1.2 | 1.2 | 52 | 500 | 58 | 600 |

(continued)

| Steel plate No. | Battery can | | | Lithium ion secondary battery | | Nickel metal-hydride storage battery | |
|---|---|---|---|---|---|---|---|
| | $t_{A1}/t_{B1}$ | $t_{A2}/t_{B2}$ | $t_{A4}/t_{B4}$ | No. | Cycle life | No. | Cycle life |
| 2 | 1.6 | 1.6 | 1.6 | 53 | 520 | 59 | 620 |
| 2 | 3.3 | 3.3 | 3.3 | 54 | 520 | 60 | 620 |
| 2 | 5 | 5 | 5 | 55 | 500 | 61 | 600 |
| 2 | 10 | 10 | 10 | 56 | 450 | 62 | 500 |

As shown in Table 7, when the values of $t_{A1}/t_{B1}$, $t_{A2}/t_{B2}$, and $t_{A4}/t_{B4}$ are in a range of 1.2 to 5, excellent results are obtained. In this range, when the values of $t_{A1}/t_{B1}$, $t_{A2}/t_{B2}$, and $t_{A4}/t_{B4}$ are from 1.6 to 3.3, particularly excellent results are obtained.

In the foregoing Examples 1 to 3, a detailed description was given of lithium ion secondary batteries and nickel metal-hydride storage batteries. However, as a result of examination of nickel cadmium storage batteries including an alkaline electrolyte, the same tendency was found. Also, as a result of examination of alkaline dry batteries, nickel manganese batteries, and lithium primary batteries, good battery characteristics were obtained particularly in terms of discharge duration after a long-term storage, according to the present invention.

Example 4

An example of alkaline dry batteries and nickel manganese batteries is now described.

(i) Ni plating treatment

Hoop-shaped cold-rolled steel plates (No. 101 to No. 122) of 0.4 mm in thickness were prepared as battery can materials. These plates included components as listed in Table 8, in addition to Fe which is the main component and an impurity. Each steel plate was electroplated with Ni on both sides thereof. The conditions of Ni electroplating are shown in Table 2. After the Ni electroplating, the Ni layers formed on both the front side and the back side of each steel plate had a thickness of approximately 2 $\mu$m.

Table 8

| Steel plate No. | Steel components (% by weight) | | | | | | Heat treatment condition | | |
|---|---|---|---|---|---|---|---|---|---|
| | C | Mn | P | Si | Al | S | Type | Temperature | Time |
| 101 | 0.002 | 0.300 | 0.040 | 0.020 | 0.040 | 0.010 | Continuous | 780°C | 2 min |
| 102 | 0.002 | 0.350 | 0.040 | 0.020 | 0.040 | 0.010 | Continuous | 780°C | 2 min |
| 103 | 0.002 | 0.400 | 0.020 | 0.020 | 0.040 | 0.010 | Continuous | 780°C | 2 min |
| 104 | 0.002 | 0.400 | 0.025 | 0.020 | 0.040 | 0.010 | Continuous | 780°C | 2 min |
| 105 | 0.002 | 0.400 | 0.030 | 0.020 | 0.040 | 0.010 | Continuous | 780°C | 2 min |
| 106 | 0.002 | 0.400 | 0.040 | 0.020 | 0.040 | 0.010 | Continuous | 780°C | 2 min |
| 107 | 0.002 | 0.400 | 0.050 | 0.020 | 0.040 | 0.010 | Continuous | 780°C | 2 min |
| 108 | 0.002 | 0.400 | 0.060 | 0.020 | 0.040 | 0.010 | Continuous | 780°C | 2 min |
| 109 | 0.002 | 0.450 | 0.040 | 0.020 | 0.040 | 0.010 | Continuous | 780°C | 2 min |
| 110 | 0.002 | 0.500 | 0.040 | 0.020 | 0.040 | 0.010 | Continuous | 780°C | 2 min |
| 111 | 0.003 | 0.020 | 0.010 | 0.020 | 0.040 | 0.010 | Continuous | 780°C | 2 min |
| 112 | 0.003 | 0.350 | 0.040 | 0.020 | 0.040 | 0.010 | Continuous | 780°C | 2 min |
| 113 | 0.003 | 0.400 | 0.040 | 0.020 | 0.040 | 0.010 | Continuous | 780°C | 2 min |
| 114 | 0.003 | 0.450 | 0.040 | 0.020 | 0.040 | 0.010 | Continuous | 780°C | 2 min |
| 115 | 0.002 | 0.400 | 0.040 | 0.010 | 0.040 | 0.010 | Continuous | 780°C | 2 min |

(continued)

| Steel plate No. | Steel components (% by weight) | | | | | | Heat treatment condition | | |
|---|---|---|---|---|---|---|---|---|---|
| | C | Mn | P | Si | Al | S | Type | Temperature | Time |
| 116 | 0.002 | 0.400 | 0.040 | 0.040 | 0.040 | 0.010 | continuous | 780°C | 2 min |
| 117 | 0.002 | 0.400 | 0.040 | 0.020 | 0.030 | 0.010 | Continuous | 780°C | 2 min |
| 118 | 0.002 | 0.400 | 0.040 | 0.020 | 0.060 | 0.010 | Continuous | 780°C | 2 min |
| 119 | 0.002 | 0.400 | 0.040 | 0.020 | 0.080 | 0.010 | Continuous | 780°C | 2 min |
| 120 | 0.002 | 0.400 | 0.040 | 0.020 | 0.040 | 0.000 | Continuous | 780°C | 2 min |
| 121 | 0.002 | 0.400 | 0.040 | 0.020 | 0.040 | 0.020 | Continuous | 780°C | 2 min |
| 122 | 0.008 | 0.020 | 0.010 | 0.020 | 0.040 | 0.010 | Box | 600°C | 20 hr |

(ii) Heat treatment

Next, each Ni-plated steel plate was placed into a continuous annealing furnace, and heat-treated at 780 °C for 2 minutes while circulating a gas consisting of about 99 % nitrogen and about 1% hydrogen (i.e., a reducing atmosphere). However, the steel plate of No. 122 was heat-treated at 600 °C in a box annealing furnace for 20 hours, as shown in Table 8. As a result of the heat treatment, a Ni-Fe alloy layer was formed on each side of the steel plate under each Ni layer. That is, the Ni-Fe alloy layer was formed between each Ni layer and the steel plate. The thickness of the Ni-Fe alloy layer was approximately 1 $\mu$m, and the thickness of the Ni layer was approximately 1.3 $\mu$m.

(iii) Working of steel plate into battery can

The heat-treated steel plate was punched out into a circular shape, and the punched plate was worked into a cup-shaped intermediate product. Although the heat-treated steel plate was not plated with bright Ni, it may be plated with bright Ni. Subsequently, the cup-shaped intermediate product was formed into a cylindrical shape by the DI process, in which it was successively subjected to drawing operations with two drawing dies and ironing operations with three ironing dies. The edge of the resultant cylindrical product was cut away to produce a battery can. A protrusion serving as an electrode terminal was formed at the center of the bottom of the battery can so as to protrude toward the outside of the battery can.

The battery can thus obtained was in the shape of a cylinder having an outer diameter of 14.5 mm and a height or 50 mm (this height includes the height of the protrusion). The thickness of the bottom of the battery can was approximately 0.4 mm, and the thickness of the side wall was 0.2 mm ($t_{A1}/t_{B1}$ = 2). That is, by the DI process, the thickness of the side wall of the battery can was reduced to half that of the original thickness. Therefore, it was considered that the thicknesses of the Ni layers and the Ni-Fe alloy layers on the side wall of the battery can were also reduced at the same rate ($t_{A2}/t_{B2}$ = 2, $t_{A3}/t_{B3}$ = 2), in the same manner as in Example 1.

(iv) Production of alkaline dry battery

Using 22 kinds of battery cans formed from 22 kinds of steel plates as listed in Table 8, 22 kinds of alkaline dry batteries were produced and named batteries 101 to 122. Ten batteries of each kind were produced.

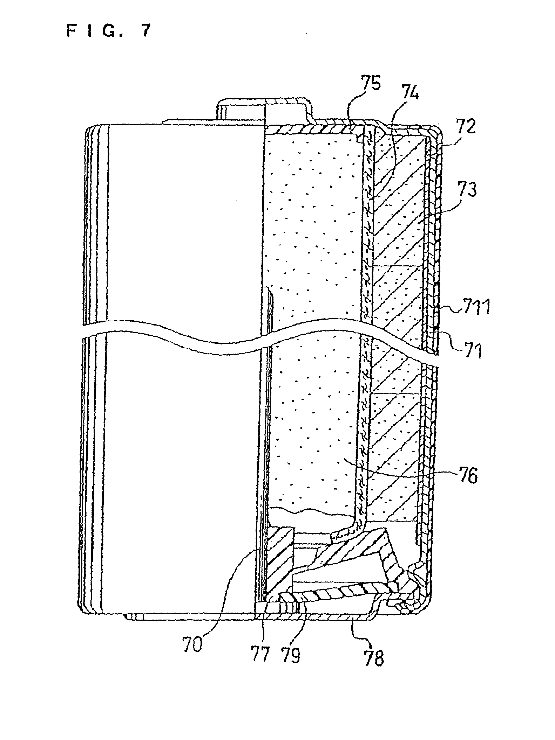

Fig. 7 is a partially sectional front view of a cylindrical alkaline dry battery produced in this example. A conductive coating film 72 composed mainly of conductive carbon was formed on the inner face of a battery can 71. Into the battery can were filled a plurality of molded positive electrode material mixtures 73 having the shape of a short cylinder. The positive electrode material mixtures are composed of manganese dioxide, which is the main constituent material, and graphite, and are impregnated with an alkaline electrolyte. After the molded positive electrode material mixtures 73 were inserted into the battery can, they were pressurized so as to closely adhere to the conductive coating film 72.

A separator 74 and an insulating cap 75 were fitted to the inner face of the hollow of the molded positive electrode material mixtures 73 and the inner face of the bottom of the battery can, respectively. Then, a gelled zinc negative electrode 76 was inserted inside the separator 74. The gelled negative electrode 76 is composed of zinc powder serving as a negative electrode active material and poly sodium acrylate serving as a gelling agent, and is impregnated with an alkaline electrolyte.

Subsequently, a negative electrode current collector 70 was inserted in the middle of the gelled zinc negative electrode 76. The negative electrode current collector 70 is integrated with a resin sealing member 77, a bottom plate 78 serving as a negative electrode terminal, and an insulating washer 79. Thereafter, the opening of the battery can 71 was sealed by caulking the opening end of the battery can 71 onto the periphery of the bottom plate 78 with the outer edge of the sealing member 77 interposed therebetween. Lastly, the outer surface of the battery can 71 was covered with a jacket label 711. In this way, an alkaline dry battery was completed.

(v) Production of nickel manganese battery

Using 22 kinds of battery cans formed from 22 kinds of steel plates as listed in Table 8, 22 kinds of nickel manganese batteries were produced and named batteries 123 to 144. Ten batteries of each kind were produced.

The nickel manganese batteries were completed in the same manner as the alkaline dry batteries except for the use of molded positive electrode material mixtures in the shape of a short cylinder, the material mixtures being composed of 100 parts by weight of an active material (50 parts by weight of manganese dioxide and 50 parts by weight of nickel oxyhydroxide), 5 parts by weight of exfoliated graphite, and a predetermined amount of an alkaline electrolyte.

(iv) Discharge test

The alkaline dry batteries (batteries 101 to 122) and the nickel manganese batteries (batteries 123 to 144) obtained in the above manner were subjected to discharge tests. The discharge conditions were: an atmosphere temperature of 20°C; and a discharge current of 1A. Discharge duration was defined as a period of time it takes for the discharge voltage to reach IV. Among 10 batteries, 5 batteries were left at 25 °C for three days following the battery production and were then subjected to tests, and the discharge durations in the tests were referred to as initial durations. Also, the other five batteries were left at 45 °C for three months following the battery production and were then subjected to tests, and the discharge durations in the tests were referred to as post-storage durations. The results are shown in Table 9. It should be noted that each duration shown in Table 9 is the mean value of five measurements.

Table 9

| Alkaline dry battery | | | Nickel Manganese Battery | | |
|---|---|---|---|---|---|
| No. | Initial duration (min) | Post-storage duration (min) | No. | Initial duration (min) | Post-storage duration (min) |
| 101 | 39.0 | 33.5 | 123 | 62.0 | 54.0 |
| 102 | 39.0 | 37.5 | 124 | 62.0 | 57.0 |
| 103 | 39.0 | 34.0 | 125 | 62.0 | 54.0 |
| 104 | 39.0 | 37.5 | 126 | 62.0 | 57.0 |
| 105 | 40.0 | 38.5 | 127 | 63.0 | 58.0 |
| 106 | 40.0 | 38.5 | 128 | 63.0 | 58.0 |
| 107 | 39.5 | 38.0 | 129 | 62.5 | 57.5 |
| 108 | 39.0 | 34.0 | 130 | 62.0 | 54.0 |
| 109 | 39.0 | 38.0 | 131 | 61.5 | 57.5 |
| 110 | 39.0 | 32.0 | 132 | 61.0 | 52.5 |
| 111 | 38.5 | 33.5 | 133 | 62.0 | 54.0 |
| 112 | 38.5 | 37.0 | 134 | 61.0 | 56.5 |
| 113 | 39.0 | 37.0 | 135 | 61.5 | 56.5 |
| 114 | 38.5 | 36.5 | 136 | 61.0 | 56.0 |
| 115 | 39.0 | 37.5 | 137 | 62.0 | 57.0 |
| 116 | 40.0 | 38.5 | 138 | 63.0 | 58.0 |
| 117 | 39.5 | 38.0 | 139 | 62.5 | 57.5 |
| 118 | 40.0 | 38.5 | 140 | 63.0 | 58.0 |
| 119 | 39.0 | 37.5 | 141 | 62.0 | 57.0 |

(continued)

| Alkaline dry battery | | | Nickel Manganese Battery | | |
|---|---|---|---|---|---|
| No. | Initial duration (min) | Post-storage duration (min) | No. | Initial duration (min) | Post-storage duration (min) |
| 120 | 40.0 | 38.5 | 142 | 63.0 | 58.0 |
| 121 | 39.0 | 37.5 | 143 | 62.0 | 57.0 |
| 122 | 39.5 | 38.0 | 144 | 62.0 | 54.0 |

In Table 9, the battery cans and the batteries (122 and 124) using the steel plates No. 122 corresponded to prior art, since they had a carbon content greater than 0.004% by weight and were subjected to a long-time heat treatment of the box annealing type.

As shown in Table 9, the batteries formed from the steel plates having carbon contents of 0.004% by weight or less produced results almost equivalent to those of the batteries 122 and 144, although the heat treatment was performed only for a short period of time. When the steel plate had a Mn content of 0.35 to 0.45 % by weight and a P content of 0.025 to 0.05 % by weight, particularly good results were obtained. As can be understood from these results, the battery cans according to the present invention require only a short-time heat treatment process, and hence they can be manufactured at low costs. In addition, the battery cans according to the present invention have high performance.

Industrial Applicability

The present Invention can be utilized in high performance batteries in general including battery cans that are highly corrosion-resistant and low-cost. The present invention can provide high performance batteries at low costs. The following numbered paragraphs are embodiments of the present invention.

1. A battery can having an opening, comprising a cylindrical side wall and a bottom, wherein said battery can is formed from a steel plate, and said steel plate has a carbon content of 0.004% by weight or less.

2. The battery can in accordance with claim 1, wherein said steel plate contains manganese and phosphorus, and said steel plate has a manganese content of 0.35% by weight or more and 0.45% by weight or less and a phosphorus content of 0.025% by weight or more and 0.05% by weight or less.

3. The battery can in accordance with claim 1, wherein a nickel layer of 0.5 to 3 $\mu$m in thickness is formed on an inner face of the battery can, with a nickel-iron alloy layer of 0.5 to 3 $\mu$m in thickness interposed between the nickel layer and the inner face of the battery can.

4. The battery can in accordance with claim 1, wherein a matte or semi-bright nickel layer of 0.5 to 3 $\mu$m in thickness is formed on an inner face of the battery can, with a nickel-iron alloy layer of 0.5 to 3 $\mu$m in thickness interposed between the matte or semi-bright nickel layer and the inner face of the battery can, and a bright nickel layer of 0.5 to 3 $\mu$m in thickness is further formed on the matte or semi-bright nickel layer.

5. The battery can in accordance with claim 1, wherein said bottom has a thickness $t_{A1}$, said side wall has a thickness $t_{B1}$, and said $t_{A1}$ and said $t_{B1}$ satisfy the relation:

$$1.2 \leqq t_{A1}/t_{B1} \leqq 5.$$

6. The battery can in accordance with claim 3, wherein said nickel-iron alloy layer on the inner face of said bottom has a thickness $t_{A2}$, said nickel-iron alloy layer on the inner face of said side wall has a thickness $t_{B2}$, and said $t_{A2}$ and said $t_{B2}$ satisfy the relation: $1.2 \leqq t_{A2}/t_{B2} \leqq 5$.

7. The battery can in accordance with claim 4, wherein said nickel-iron alloy layer on the inner face of said bottom has a thickness $t_{A2}$, said nickel-iron alloy layer on the inner face of said side wall has a thickness $t_{B2}$, and said $t_{A2}$ and said $t_{B2}$ satisfy the relation: $1.2 \leqq t_{A2}/t_{B2} \leqq 5$.

8. The battery can in accordance with claim 3, wherein said nickel layer on the inner face of said bottom has a thickness $t_{A3}$, said nickel layer on the inner face of said side wall has a thickness $t_{B3}$, and said $t_{A3}$ and said $t_{B3}$ satisfy the relation: $1.2 \leqq t_{A3}/t_{B3} \leqq 5$.

9. The battery can in accordance with claim 4, wherein said matte or semi-bright nickel layer and said bright nickel layer on the inner face of said bottom have a total thickness $t_{A4}$, said matte or semi-bright nickel layer and said bright nickel layer on the inner face of said side wall have a total thickness $t_{B4}$, and said $t_{A4}$ and said $t_{B4}$ satisfy the relation: $1.2 \leqq t_{A4}/t_{B4} \leqq 5$.

10. A method of manufacturing a battery can having an opening, the method comprising the steps of:

(1) applying Ni plating to both sides of a cold-rolled steel plate having a carbon content of 0.004% by weight or less;
(2) placing said Ni-plated steel plate into a continuous annealing furnace and heat-treating it under a reducing atmosphere at 550 to 850°C for 0.5 to 10 minutes;
(3) applying bright Ni plating to at least one face of said heat-treated steel plate;
(4) working said bright-Ni-plated steel plate into a cup-shaped intermediate product such that the bright-Ni-plated face of said steel plate faces inward; and
(5) drawing said cup-shaped intermediate product with at least one drawing die and ironing it with ironing dies arranged in multi-stages.

11. A method of manufacturing a battery can having an opening, the method comprising the steps of:

(1) applying Ni plating to both sides of a cold-rolled steel plate having a carbon content of 0.004% by weight or less, a manganese content of 0.35% by weight or more and 0.45% by weight or less, and a phosphorus content of 0.025% by weight or more and 0.05% by weight or less;
(2) placing said Ni-plated steel plate into a continuous annealing furnace and heat-treating it under a reducing atmosphere at 550 to 850 °C for 0.5 to 10 minutes;
(3) working said heat-treated steel plate into a cup-shaped intermediate product; and
(4) drawing said cup-shaped intermediate product with at least one drawing die and ironing it with ironing dies arranged in multi-stages.

12. An alkaline dry battery comprising: a positive electrode comprising a manganese compound; a negative electrode comprising a zinc compound; a separator; an alkaline electrolyte; and the battery can in accordance with claim 1 accommodating said positive and negative electrodes, said separator, and said electrolyte.

13. A nickel manganese battery comprising: a positive electrode comprising a nickel compound and a manganese compound; a negative electrode comprising a zinc compound; a separator; an alkaline electrolyte; and the battery can in accordance with claim 1 accommodating said positive and negative electrodes, said separator, and said electrolyte.

14. An alkaline storage battery comprising: a positive electrode comprising a nickel compound; a negative electrode; a separator; an alkaline electrolyte; and the battery can in accordance with claim 1 accommodating said positive and negative electrodes, said separator, and said electrolyte.

15. A non-aqueous electrolyte secondary battery comprising: a positive electrode comprising a lithium-containing composite oxide, a negative electrode; a separator; a non-aqueous electrolyte; and the battery can in accordance with claim 1 accommodating said positive and negative electrodes, said separator, and said electrolyte.

**Claims**

1. A battery can having an opening, comprising a cylindrical side wall and a bottom, wherein said battery can is formed from a steel plate, and said steel plate has a carbon content of 0.004% by weight or less, and wherein a matte or semi-bright nickel layer of 0.5 to 3 $\mu$m in thickness is formed on an inner face of the battery can, with a nickel-iron alloy layer of 0.5 to 3 $\mu$m in thickness interposed between the matte or semi-bright nickel layer and the inner face of the battery can, and a bright nickel layer of 0.5 to 3 $\mu$m in thickness is further formed on the matte or semi-bright nickel layer.

2. The battery can in accordance with claim 1 wherein said bottom has a thickness $t_{A1}$, said side wall has a thickness $t_{B1}$, and said $t_{A1}$ and said $t_{B1}$ satisfy the relation:

$$1.2 \leqq t_{A1}/t_{B1} \leqq 5.$$

3. The battery can in accordance with claim 1, wherein said nickel-iron alloy layer on the inner face of said bottom has a thickness $t_{A2}$, said nickel-iron alloy layer on the inner face of said side wall has a thickness $t_{B2}$, and said $t_{A2}$ and said $t_{B2}$ satisfy the relation: $1.2 \leqq t_{A2}/t_{B2} \leqq 5$.

4. The battery can in accordance with claim 1, wherein said nickel layer on the inner face of said bottom has a thickness $t_{A3}$, said nickel layer on the inner face of said side wall has a thickness $t_{B3}$, and said $t_{A3}$ and said $t_{B3}$ satisfy the relation: $1.2 \leqq t_{A3}/t_{B3} \leqq 5$.

5. The battery can in accordance with claim 1, wherein said matte or semi-bright nickel layer and said bright nickel layer on the inner face of said bottom have a total thickness $t_{A4}$, said matte or semi-bright nickel layer and said bright nickel layer on the inner face of said side wall have a total thickness $t_{B4}$, and said $t_{A4}$ and said $t_{B4}$ satisfy the relation: $1.2 \leqq t_{A4}/t_{B4} \leqq 5$.

6. A method of manufacturing a battery can having an opening, the method comprising the steps of:

   (1) applying Ni plating to both sides of a cold-rolled steel plate having a carbon content of 0.004 % by weight or less;
   (2) placing said Ni-plated steel plate into a continuous annealing furnace and heat-treating it under a reducing atmosphere at 550 to 850 °C for 0.5 to 10 minutes;
   (3) applying bright Ni plating to at least one face of said heat-treated steel plate;
   (4) working said bright-Ni-plated steel plate into a cup-shaped intermediate product such that the bright-Ni-plated face of said steel plate faces inward; and
   (5) drawing said cup-shaped intermediate product with at least one drawing die and ironing it with ironing dies arranged in multi-stages.

7. An alkaline dry battery comprising: a positive electrode comprising a manganese compound; a negative electrode comprising zinc or a zinc compound; a separator; an alkaline electrolyte; and the battery can in accordance with claim 1 accommodating said positive and negative electrodes, said separator, and said electrolyte.

8. A nickel manganese battery comprising: a positive electrode comprising a nickel compound and a manganese compound; a negative electrode comprising zinc or a zinc compound; a separator; an alkaline electrolyte; and the battery can in accordance with claim 1 accommodating said positive and negative electrodes, said separator, and said electrolyte.

9. An alkaline storage battery comprising: a positive electrode comprising a nickel compound; a negative electrode; a separator; an alkaline electrolyte; and the battery can in accordance with claim 1 accommodating said positive and negative electrodes, said separator, and said electrolyte.

10. A non-aqueous electrolyte secondary battery comprising: a positive electrode comprising a lithium-containing composite oxide; a negative electrode; a separator; a non-aqueous electrolyte: and the battery can in accordance with claim 1 accommodating said positive and negative electrodes, said separator, and said electrolyte.

F I G. 1

EP 1 950 819 A1

(A) 11          (B) 12          (C) 13          (D) 14

(a) 11          (b) 12          (c) 13          (d) 14

EP 1 950 819 A1

FIG. 2

(a)

(b)

(c)

(d)

FIG. 3

(a)

(b)

F I G. 4

(a)

40

(b)

41    43

42

F I G. 5

(a)

50

(b)

51

53

50

51a

51b

51c

51d

(c)

51

53

51a

51b

51c

51d

52

(d)

52'

E

52

(e)

54

(f)

55

54

FIG. 6

F I G. 7

## EUROPEAN SEARCH REPORT

**European Patent Office**

**Application Number**

EP 08 15 3731

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 603 782 A (SUGIKAWA HIROFUMI ET AL) 18 February 1997 (1997-02-18) | 1-5,7-10 | INV. H01M2/02 |
| Y | * column 16, line 59 - column 17, line 8; figure 24; table 1 * <br> * column 17, line 14 - line 41; table 1 * <br> * column 18, line 59 - line 65 * <br> * column 22, line 60 - column 23, line 4 * | 6 | |
| Y | PATENT ABSTRACTS OF JAPAN vol. 1996, no. 06, 28 June 1996 (1996-06-28) & JP 08 055613 A (MATSUSHITA ELECTRIC IND CO LTD), 27 February 1996 (1996-02-27) * abstract * | 6 | |
| Y | EP 1 202 360 A (IKKOSEIKO CO LTD ; MATSUSHITA ELECTRIC IND CO LTD (JP)) 2 May 2002 (2002-05-02) * claims 9,10; figures 5-8 * | 6 | |
| A | EP 1 103 638 A (TOYO KOHAN CO LTD) 30 May 2001 (2001-05-30) * the whole document * | 1-10 | **TECHNICAL FIELDS SEARCHED (IPC)** <br> H01M |

The present search report has been drawn up for all claims

| Place of search | Date of completion of the search | Examiner |
|---|---|---|
| Munich | 16 May 2008 | Hintermaier, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT**
**ON EUROPEAN PATENT APPLICATION NO.**

EP 08 15 3731

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2008

| Patent document cited in search report | | Publication date | Patent family member(s) | | Publication date |
|---|---|---|---|---|---|
| US 5603782 | A | 18-02-1997 | US | 5840441 A | 24-11-1998 |
| JP 08055613 | A | 27-02-1996 | JP | 2615529 B2 | 28-05-1997 |
| EP 1202360 | A | 02-05-2002 | CA | 2370882 A1 | 16-11-2000 |
| | | | CN | 1349666 A | 15-05-2002 |
| | | | WO | 0069004 A1 | 16-11-2000 |
| | | | US | 6929880 B1 | 16-08-2005 |
| EP 1103638 | A | 30-05-2001 | AU | 4798499 A | 14-02-2000 |
| | | | CN | 1311829 A | 05-09-2001 |
| | | | WO | 0005437 A1 | 03-02-2000 |
| | | | TW | 445663 B | 11-07-2001 |
| | | | US | 6692869 B1 | 17-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI855613 B

- JP HEI6346150 B